# EUROPÄISCHE PATENTSCHRIFT

(11) **EP 2 248 253 B1**
(45) Veröffentlichungstag und Bekanntmachung des Hinweises auf die Patenterteilung: **02.11.2011**
(21) Anmeldenummer: 09715859.6
(22) Anmeldetag: 17.02.2009
(51) Int. Cl.: H02P 9/10

(54) **GENERATORVORRICHTUNG MIT ÜBERSPANNUNGSÜBERWACHUNG**
GENERATOR DEVICE WITH OVERVOLTAGE MONITORING
SYSTEME D'ALTERNATEUR AVEC SURVEILLANCE DE SURTENSION

(30) Priorität: 26.02.2008 DE 102008011224
(43) Veröffentlichungstag der Anmeldung: 10.11.2010
(73) Patentinhaber: Robert Bosch GmbH, 70442 Stuttgart (DE)
(72) Erfinder: HERZ, Michael, 70469 Stuttgart (DE); KOSS, Thomas, 72768 Reutlingen (DE); SUELZLE, Helmut, 71691 Freiberg (DE)
(86) Internationale Anmeldenummer: PCT/EP2009/051836
(87) Internationale Veröffentlichungsnummer: WO 2009/106453

(56) Entgegenhaltungen:
- DE-A1- 19 649 790
- DE-A1-102006 032 736
- US-A1- 2008 019 482

## Beschreibung

Die Erfindung betrifft eine Generatorvorrichtung, welche insbesondere zur Bereitstellung einer im Bordnetz eines Kraftfahrzeugs benötigten Gleichspannung vorgesehen ist, und welche Mittel zu einer Überspannungsüberwachung aufweist.

### Stand der Technik

Es ist bereits bekannt, die Ausgangsspannung eines Generators mittels eines Generatorreglers zu regeln. Die Ausgangsspannung eines Generators ist abhängig von mehreren Einflussgrößen, zu denen die Drehzahl, die elektrische Belastung im Bordnetz, der Ladezustand der Starterbatterie und die Temperatur gehören. Um eine konstante Spannung im Bordnetz zu erzeugen, regelt der Generatorregler die Ausgangsspannung des Generators innerhalb vorgegebener Grenzen. Diese Regelung erfolgt über eine Anpassung des durch die Erregerwicklung des Generators fließenden Erregerstromes. Zur Anpassung des Erregerstromes wird eine Änderung des Tastverhältnisses eines von der Reglersteuerung bereitgestellten PWM-Ansteuersignals für einen Schalttransistor durchgeführt.

Bei Verwendung eines High-Side-Transistors als Schalttransistor des Generatorreglers wird der Erregerstrom von einem Gleichspannungsversorgungsanschluss B+ abgenommen und über den Transistor zur Erregerwicklung geführt. Der zweite Anschluss der Erregerwicklung ist mit Masse verbunden.

Die an den Phasenspannungsanschlüssen U, V und W des Generators erzeugten Wechselspannungen werden in einer mehrere Zweige aufweisenden Gleichrichteranordnung gleichgerichtet und dem Bordnetz des Kraftfahrzeugs bereitgestellt und auch dem genannten Gleichspannungsversorgungsanschluss des Generatorreglers zugeleitet.

Des Weiteren ist der Generatorregler auch mit einem der Phasenspannungsanschlüsse des Generators verbunden, um eine der Phasenspannungen des Generators auszuwerten.

Der Generatorregler weist eine Reglersteuerung auf, welche ein Schaltsignal für den Schalttransistor des Generatorreglers bereitstellt und welcher als Eingangssignale die am Gleichspannungsversorgungsanschluss B+ anliegende Gleichspannung sowie eine der Phasenspannungen des Generators zugeführt werden.

Bei heute in Serie befindlichen Generatorreglern ist eine Funktion implementiert, welche im Falle eines Lastabwurfes eine vollständige Entregung des Generators verhindert. Zu diesem Zweck überwacht die Reglersteuerung des Generatorreglers die ihr zugeführte Phasenspannung und verändert das Schaltsignal für den Schalttransistor, wenn diese Phasenspannung einen vorgegebenen Wert unterschreitet.

Dieser Phasenspannungsanschluss des Generatorreglers stellt eine mechanische, beispielsweise verschraubte Verbindung zwischen dem Generatorregler und der dem Generator zugehörigen Gleichrichteranordnung dar, wobei die genannte Phasenspannung an einem Verbindungspunkt zwischen zwei Dioden eines Gleichrichterzweiges abgegriffen wird. An der genannten Verbindung zwischen dem Generatorregler und der Gleichrichteranordnung kann sich aufgrund verschiedener Fehlerbilder ein Übergangswiderstand einstellen. Dies führt abhängig von der Höhe des Übergangswiderstandes zu einem Spannungsabfall. An diesem Spannungsabfall erkennt die Reglersteuerung ein Vorliegen einer zu geringen Phasenspannung. Der Spannungsabfall ist in ungünstigen Fällen so groß, dass die der Phasenspannung zugeordnete Eingriffsschwelle der Reglersteuerung unterschritten wird. Dadurch erfolgt ein Eingriff in die Regelung, durch welchen im Bordnetz eine Überspannung entstehen kann.

Es ist bereits bekannt, dem Auftreten einer derartigen Überspannung durch eine Begrenzung des maximal zugelassenen Erregerstromes oder Tastverhältnisses entgegenzuwirken. In der Praxis können sich jedoch trotz dieser Begrenzung Arbeitspunkte mit Überspannung einstellen.

Es ist auch bereits bekannt, im Sinne einer Überwachung des Phasenzuleitungswiderstandes durch eine Modulation des Stromes im Abfragepfad den daraus resultierenden Spannungsunterschied auszuwerten und dann, wenn dieser einen vorgegebenen Schwellenwert überschreitet, diesen Regeleingriff zu deaktivieren. Dieses Vorgehen ist jedoch aufwendig, da es sich bei einem Phasenspannungssignal um ein Signal mit hoher Spannungsdynamik handelt.

Aus der DE 196 49 790 A1 ist eine Generatorvorrichtung mit einem Generatorregler und einer einem Generator und eine Gleichrichteranordnung aufweisenden Generatoreinheit bekannt, bei der der Generatorregler in den Betriebsspannungsanschluss und einen Phasenspannungsanschluss aufweist.

### Vorteile der Erfindung

Eine Generatorvorrichtung mit den Merkmalen des Anspruchs 1 weist demgegenüber den Vorteil auf, dass während eines Regeleingriffes über die Phasenspannung eine zusätzliche Überwachung des von der Reglersteuerung bereitgestellten Schaltsignals erfolgt, um einen Zustand zu hoher Erregung und damit das Auftreten einer Überspannung im Bordnetz zu vermeiden. Dies wird im Wesentlichen dadurch erreicht, dass der Generatorregler dann, wenn während eines Regeleingriffs der Phasenspannung die am Betriebsspannungsanschluss B+ anliegende gefilterte Gleichspannung für eine vorgegebene Zeitdauer einen vorgegebenen Grenzwert überschreitet, den Regeleingriff der Phasenspannung deaktiviert.

Weitere vorteilhafte Eigenschaften einer Generatorvorrichtung gemäß der Erfindung ergeben sich aus deren beispielhafter Erläuterung anhand der Zeichnung.

### Zeichnung

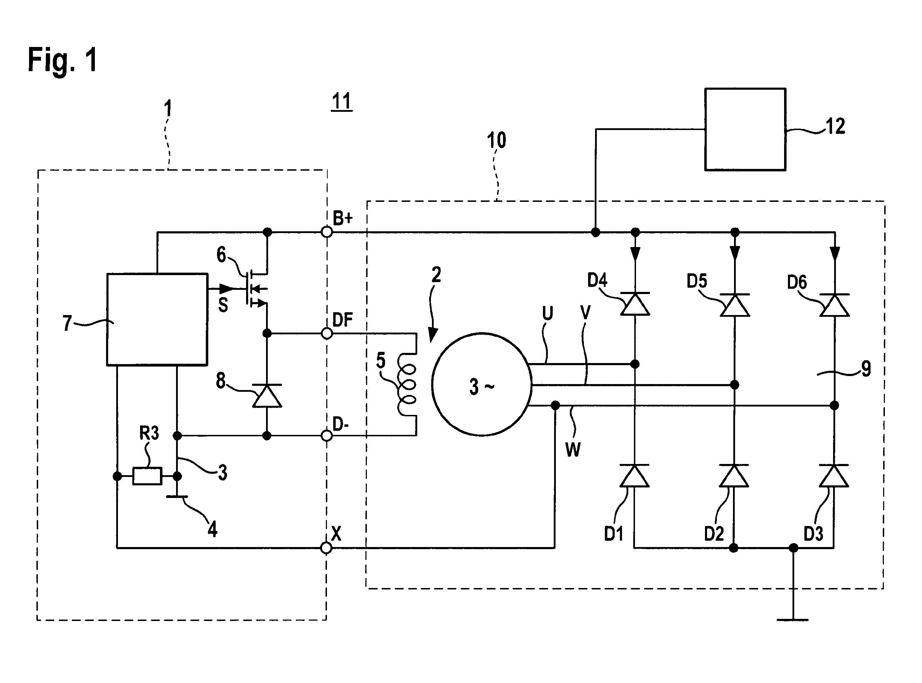

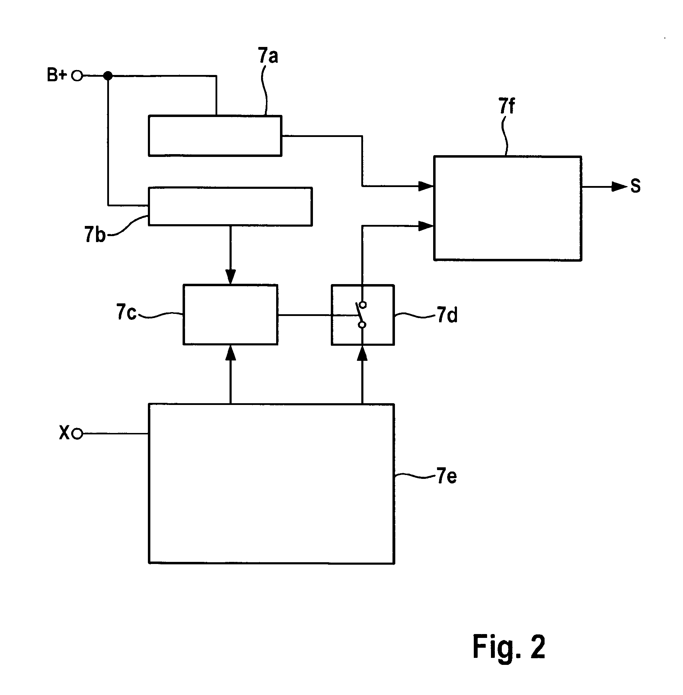

Die Figur 1 zeigt ein Schaltbild einer Generatorvorrichtung gemäß der Erfindung. Die Figur 2 zeigt eine detaillierte Darstellung der Reglersteuerung des in der Figur 1 gezeigten Generatorreglers.

### Beschreibung

Die Figur 1 zeigt ein Schaltbild einer Generatorvorrichtung gemäß der Erfindung. Die dargestellte Generatorvorrichtung 11 weist einen Generatorregler 1 und eine Generatoreinheit 10 auf, die an ihrem Ausgang eine Versorgungsgleichspannung für das Bordnetz 12 eines Kraftfahrzeugs bereitstellt.

Die Generatoreinheit 10 weist einen Generator 2 und eine Gleichrichteranordnung 9 auf. Der Generator 2 enthält eine Erregerwicklung 5 und nicht näher dargestellte Phasenwicklungen, die beispielsweise in Form einer Sternschaltung oder einer Dreieckschaltung miteinander verschaltet sind. Der Generator 2 stellt an seinen Phasenspannungsanschlüssen U, V und W Wechselspannungen zur Verfügung, die der nachgeschalteten Gleichrichteranordnung 9 zugeführt werden. Alternativ zum gezeigten Ausführungsbeispiel kann auch eine andere Anzahl von Phasen bzw. Phasenspannungsanschlüssen vorliegen.

Die Gleichrichteranordnung 9 enthält drei Zweige, von denen jeder eine Reihenschaltung zweier Dioden oder anderer geeigneter Komponenten aufweist und einem anderen der Phasenspannungsanschlüsse des Generators zugeordnet ist. Der Phasenspannungsanschluss U des Generators 2 ist mit dem Verbindungspunkt zwischen den Dioden D1 und D4 des ersten Gleichrichterzweigs verbunden. Der Phasenspannungsanschluss V des Generators 2 ist an einen Verbindungspunkt zwischen den Dioden D2 und D5 des zweiten Gleichrichterzweigs angeschlossen. Der Phasenspannungsanschluss W des Generators 2 ist mit einem Verbindungspunkt zwischen den Dioden D3 und D6 des dritten Gleichrichterzweigs verbunden.

Die Kathoden der Dioden D4, D5 und D6 sind miteinander verbunden. Dort wird die Ausgangsgleichspannung der Generatoreinheit 10 bereitgestellt und an das Bordnetz 12 weitergegeben. Die Anoden der Dioden D1, D2 und D3 sind ebenfalls miteinander verbunden und liegen auf Masse.

Der Phasenspannungsanschluss W des Generators 2 steht des Weiteren über einen Anschluss X des Generatorreglers 1 mit der Reglersteuerung 7 des Generatorreglers 1 und über einen Widerstand R3 und eine Masseverbindung 3 des Generatorreglers mit Masse 4 in Verbindung.

Der Generatorregler 1 weist einen Betriebsspannungsanschluss B+ sowie weitere Anschlüsse DF, D- und X auf. Des Weiteren enthält der Generatorregler eine Reglersteuerung 7, welche mit einer Auswertelogik versehen ist. Die Reglersteuerung 7 ist dazu vorgesehen, einem Schalttransistor 6 ein PWM-Ansteuersignal zur Verfügung zu stellen. Die Reglersteuerung 7 ist weiterhin mit dem Betriebsspannungsanschluss B+ und über die Masseverbindung 3 mit Masse 4 verbunden. Ferner steht die Reglersteuerung 7 mit dem Anschluss X des Generatorreglers 1 in Verbindung, um ein vom Phasenspannungsanschluss W des Generators 2 abgeleitetes Phasenspannungssignal zu empfangen.

Darüber hinaus weist die in der Figur 1 gezeigte Vorrichtung einen Erregerstromkreis auf. Dieser verläuft vom Betriebsspannungsanschluss B+ des Generatorreglers 1 über den Schalttransistor 6 des Generatorreglers, den Anschluss DF des Generatorreglers, die Erregerwicklung 5, den Anschluss D- des Generatorreglers und die Masseverbindung 3 nach Masse 4. Zwischen die Anschlüsse D- und DF des Generatorreglers 1 ist entweder eine Freilaufdiode 8 geschaltet oder es wird ein aktiver Freilauf mit einem Schalttransistor verwendet.

Die Reglersteuerung 7, welche mit dem Betriebsspannungsanschluss B+ und über den Anschluss X mit dem Phasenspannungsanschluss W des Generators 2 verbunden ist, steuert den Schalter 6 mit einem Steuersignal s derart an, dass ein Erregerstrom durch die Erregerwicklung 5 fließt, der sowohl von der am Betriebsspannungsanschluss B+ vorliegenden Gleichspannung als auch zeitweise von der ihr über den Anschluss X zugeleiteten Phasenspannung abhängig ist.

Die Figur 2 zeigt eine detailliertere Darstellung der Reglersteuerung 7. Diese weist einen Betriebsspannungs-Istwertdetektor 7a, einen Betriebsspannungs-Komparator 7b, ein Zeitglied 7c, ein Schaltglied 7d, einen Phasenspannungs-Detektor 7e und eine Recheneinheit 7f auf. Die Reglersteuerung 7 mit den vorgenannten Elementen ist vorzugsweise in Form eines Mikrocomputers oder einer Logikschaltung realisiert. Die Reglersteuerung 7 ist dazu vorgesehen, aus den ihr zugeführten Eingangssignalen ein Steuersignal s für den Schalttransistor 6 des Generatorreglers 1 zu ermitteln.

Zu den Eingangssignalen der Recheneinheit 7f gehört der Istwert der am Betriebsspannungsanschluss B+ vorliegenden Betriebsspannung, der am Ausgang des Betriebsspannungs-Istwertdetektor 7a vorliegt. Des Weiteren gehört zu den Eingangssignalen der Recheneinheit 7f bei geschlossenem Schalter 7d das Ausgangssignal des PhasenspannungsDetektors 7e.

Mittels dieser Reglersteuerung erfolgt eine Überspannungsüberwachung wie folgt:
Ist die am Eingang X anliegende Phasenspannung kleiner als eine vorgegebene Regelschwelle, dann ist der Phasenspannungs-Detektor 7e über den Schalter 7d, welcher sich im geschlossenen Zustand befindet, mit der Recheneinheit 7f verbunden, so dass die Recheneinheit 7f das Steuersignal s derart erzeugt, dass eine vollständige Entregung des Generators vermieden wird.

Während dieses Eingriffs der Phasenspannung in die Regelung überwacht der Betriebsspannungskomparator 7b die am Betriebsspannungsanschluss B+ anliegende Gleichspannung dahingehend, ob sie einen vorgegebenen oberen Grenzwert UB+ₘₐₓ übersteigt oder nicht.

Erkennt der Betriebsspannungs-Komparator 7b, dass die am Betriebsspannungsanschluss B+ anliegende Gleichspannung den vorgegebenen oberen Grenzwert UB+ₘₐₓ übersteigt, dann gibt er ein Startsignal für das Zeitglied 7c aus. Dieses Zeitglied 7c ist auf ein Zeitintervall eingestellt, welches derart bemessen ist, dass durch einen Lastabwurf verursachte Spannungsschwankungen üblicherweise wieder ausgeglichen sind.

Besteht dieser Zustand, in welchem über das Ausgangssignal des Phasenspannungsdetektors 7e in die Regelung eingegriffen wird und in welchem die am Betriebsspannungsanschluss B+ anliegende Gleichspannung den vorgegebenen oberen Grenzwert UB+ₘₐₓ übersteigt, für einen Zeitraum, der länger ist als das durch das Zeitglied 7c vorgegebene Zeitintervall, dann bringt das Zeitglied 7c das Schaltglied 7d in den geöffneten Zustand. In diesem geöffneten Zustand des Schaltgliedes 7d ist der Einfluss der Phasenspannung auf die Regelung deaktiviert.

Als Folge davon erfolgt die weitere Regelung im Wesentlichen in Abhängigkeit von der am Betriebsspannungsanschluss B+ vorliegenden Gleichspannung, welche der Recheneinheit 7f über den Betriebsspannungs-Istwertdetektor 7a zugeführt wird.

In diesem Fall kann der Generator im Falle eines Lastabwurfs zwar vollständig entregt werden, doch stellt dies in der Regel lediglich eine Einbuße an Komfort dar, die sich in einem kurzzeitigem Spannungseinbruch im Bordnetz zeigt. Es wird aber in vorteilhafter Weise das Auftreten einer länger andauernden Überspannung und einer durch diese Überspannung hervorgerufenen Schädigung von Bordnetzkomponenten verhindert.

Wird im Laufe dieser Deaktivierung des Phasenspannungs-Regeleingriffs erkannt, dass die Phasenspannung wieder größer wird als die durch den Phasenspannungs-Detektor 7e eingestellte Phasenspannungs-Eingriffsschwelle und dass der vorgegebene Grenzwert UB+ₘₐₓ für die am Betriebsspannungsanschluss B+ anliegende Betriebsspannung wieder unterschritten wird, dann wird der Eingriff der Phasenspannung in die Regelung entweder sofort oder nach Ablauf einer vorgegebenen Zeitspanne wieder freigegeben, indem das Schaltglied 7d wieder in seinen leitenden Zustand gebracht wird.

Eine Weiterbildung der Erfindung besteht darin, den geöffneten Zustand des Schalters 7d, d. h. einen deaktivierten Phaseneingriff in die Regelung, unter Verwendung einer Lampe oder eines Statusflags einem Steuergerät zu signalisieren.

## Patentansprüche

1. Generatorvorrichtung mit einem Generatorregler (1) und einer einen Generator (2) und eine Gleichrichteranordnung (9) aufweisenden Generatoreinheit (10), wobei der Generatorregler (1) einen Betriebsspannungsanschluss (B+) und einen Phasenspannungsanschluss (X) aufweist, **dadurch gekennzeichnet, dass** der Generatorregler (1) dann, wenn während eines Regeleingriffs der Phasenspannung die am Betriebsspannungsanschluss (B+) anliegende Gleichspannung für eine vorgegebene Zeitdauer einen vorgegebenen Grenzwert (UBₘₐₓ) überschreitet, den Regeleingriff der Phasenspannung deaktiviert.

2. Generatorvorrichtung nach Anspruch 1, **dadurch gekennzeichnet, dass** der Generatorregler (1) eine Reglersteuerung (7) aufweist, die mit dem Betriebsspannungsanschluss (B+) und dem Phasenspannungsanschluss (X) verbunden ist.

3. Generatorvorrichtung nach Anspruch 2, **dadurch gekennzeichnet, dass** die Reglersteuerung (7)
- einen Betriebsspannungs-Istwertdetektor (7a),
- einen Phasenspannungs-Detektor (7e) und
- eine zur Ermittlung eines Steuersignals (s) für einen Schalttransistor (6) des Generatorreglers (1) vorgesehene Recheneinheit (7f) oder Logikschaltung aufweist.

4. Generatorvorrichtung nach einem der vorhergehenden Ansprüche, **dadurch gekennzeichnet, dass** die Reglersteuerung (7) des Weiteren
- einen mit dem Betriebsspannungsanschluss (B+) verbundenen Betriebsspannungs-Komparator (7b),
- einen Phasenspannungs-Detektor (7e),
- ein zwischen dem Phasenspannungs-Detektor (7e) und der Recheneinheit (7f) angeordnetes Schaltglied (7d) und
- ein das Schaltglied (7d) steuerndes Zeitglied (7c) aufweist, wobei
- das Zeitglied (7c) das Schaltglied (7d) in seinen geöffneten Zustand bringt, wenn während eines Regeleingriffs der Phasenspannung die am Betriebsspannungsanschluss (B+) anliegende Gleichspannung für eine vorgegebene Zeitdauer größer ist als der vorgegebene Grenzwert (UB+ₘₐₓ).

5. Generatorvorrichtung nach Anspruch 4, **dadurch gekennzeichnet, dass** der Betriebsspannungs-Istwertdetektor (7a), der Betriebsspannungs-Komparator (7b), das Zeitglied (7c), das Schaltglied (7d), der Phasenspannungs-Detektor (7e) und die Recheneinheit (7f) durch einen Mikrocomputer oder eine Logikschaltung realisiert sind.

## Claims

1. Generator apparatus having a generator controller (1) and a generator unit (10) which has a generator (2) and a rectifier arrangement (9), with the generator controller (1) having an operating voltage connection (B+) and a phase voltage connection (X), **characterized in that** the generator controller (1) deactivates a control intervention in the phase voltage when, during the control intervention in the phase voltage, the DC voltage which is applied to the operating voltage connection (B+) exceeds a predefined limit value (UBₘₐₓ) for a predefined period of time.

2. Generator apparatus according to Claim 1, **characterized in that** the generator controller (1) has a controller control system (7) which is connected to the operating voltage connection (B+) and to the phase voltage connection (X).

3. Generator apparatus according to Claim 2, **characterized in that** the controller control system (7) has
- an operating voltage actual value detector (7a),
- a phase voltage detector (7e) and
- a computer unit (7f) or logic circuit which is provided to acquire a control signal (s) for a switching transistor (6) of the generator controller (1).

4. Generator apparatus according to one of the preceding claims, **characterized in that** the controller control system (7) also has
- an operating voltage comparator (7b) which is connected to the operating voltage connection (B+),
- a phase voltage detector (7e),
- a switching element (7d) which is arranged between the phase voltage detector (7e) and the computer unit (7f), and
- a timing element (7c) which controls the switching element (7d), with
- the timing element (7c) moving the switching element (7d) to its open state when, during a control intervention in the phase voltage, the DC voltage which is applied to the operating voltage connection (B+) is greater than the predefined limit value (UB+ₘₐₓ) for a predefined period of time.

5. Generator apparatus according to Claim 4, **characterized in that** the operating voltage actual value detector (7a), the operating voltage comparator (7b), the timing element (7c), the switching element (7d), the phase voltage detector (7e) and the computer unit (7f) are realized by a microcomputer or a logic circuit.

## Revendications

1. Ensemble de génératrice doté d'un régulateur (1) de génératrice et d'une unité de génératrice (10) qui présente une génératrice (2) et un système redresseur (9), le régulateur (1) de la génératrice présentant une borne (B+) de raccordement à la tension de service et une borne (X) de raccordement à la tension de phase, **caractérisé en ce que**
lorsque la tension continue appliquée sur la borne (B+) de raccordement à la tension de service n'atteint pas une valeur limite prédéterminée (UBₘₐₓ) pendant une durée prédéterminée au cours d'une intervention de régulation sur la tension de phase, le régulateur (1) de la génératrice désactive l'intervention de régulation sur la tension de phase.

2. Ensemble de génératrice selon la revendication 1, **caractérisé en ce que** le régulateur (1) de la génératrice présente une commande (7) de régulateur reliée à la borne (B+) de raccordement à la tension de service et à la borne (X) de raccordement à la tension de phase.

3. Ensemble de génératrice selon la revendication 2, **caractérisé en ce que** la commande (7) du régulateur présente
- un détecteur (7a) de la valeur effective de la tension de service,
- un détecteur (7e) de la tension de phase et
- une unité de calcul (7f) ou un circuit logique prévu(e) pour déterminer un signal de commande (s) d'un transistor de commutation (6) du régulateur (1) de la génératrice.

4. Ensemble de génératrice selon l'une des revendications précédentes, **caractérisé en ce que** la commande (7) du régulateur présente en outre
- un comparateur (7b) de tension de service raccordé à la borne (B+) de raccordement à la tension de service,
- un détecteur (7e) de tension de phase,
- un organe de commutation (7d) disposé entre le détecteur (7e) de tension de phase et l'unité de calcul (7f) et
- un organe de temporisation (7c) qui commande l'organe de commutation (7d),
- l'organe de temporisation (7c) amenant l'organe de commutation (7d) dans son état ouvert si la tension continue appliquée sur la borne (B+) de raccordement à la tension de service est plus grande que la valeur limite prédéterminée (UB+ₘₐₓ) pendant une durée prédéterminée au cours d'une intervention de régulation de la tension de phase.

5. Ensemble de génératrice selon la revendication 4, **caractérisé en ce que** le détecteur (7a) de valeur de consigne de la tension de service, le comparateur (7b) de tension de service, l'organe de temporisation (7c), l'organe de commutation (7d), le détecteur (7e) de tension de phase et l'unité de calcul (7f) sont réalisés sous la forme d'un micro-ordinateur ou d'un circuit logique.
